# EUROPEAN PATENT APPLICATION

(11) **EP 0 919 428 A2**
(43) Date of publication of application: **02.06.1999**
(21) Application number: 98122436.3
(22) Date of filing: 26.11.1998
(51) Int. Cl.: B60N 2/48, B60N 2/44

(54) **A head-rest for a car seat**

(30) Priority: 28.11.1997 IT TO970234 U
(71) Applicant: GESTIND-M.B." MANIFATTURA DI BRUZOLO" S.P.A, I-10050 Bruzolo (Torino) (IT)
(72) Inventor: De Filippo, Emilio, 10050 Bruzolo (IT)
(74) Representative: Franzolin, Luigi

(57) **Abstract**

A head-rest (1) for a car seat which includes a cushion body (2) of expanded plastics material with a velvety outer surface formed by a flocking process.

## Description

The present invention relates to a head-rest for a car seat, comprising a cushion body of expanded plastics material.

The cushion body of prior art head-rests of this type typically has a smooth and homogeneous outer surface consisting in a skin-like layer formed integrally with the expanded plastics material as a result of the moulding process. This surface layer is obviously not particularly attractive and is therefore covered with a layer of textile or similar material, which significantly improves not only the appearance but also the functional ability of the head-rest.

However, the application of the covering layer naturally complicates the production of the head-rest, thereby increasing costs.

The object of the present invention is to solve the aforesaid problem, by providing a head-rest of the above type for a motor car which does not require the application of a finishing layer over the body of the cushion.

This aim is achieved, according to the invention, thanks to the fact that the cushion body has a velvety outer surface achieved by flocking.

The invention will now be described in detail with reference to the appended drawings, provided purely by way of non-limitative example, in which:
Figure 1 is a schematic front elevation view of a head-rest for a car seat according to the invention, and
Figure 2 shows, on an enlarged scale, a part of the head-rest of the invention, shown in Figure 1.

In the drawings, a head-rest for a seat of a motor-car is generally indicated 1 and comprises a cushion body 2 into which a support structure (not illustrated), usually of moulded plastics material, is incorporated and connected in turn to a pair of parallel support rods 3 projecting from the base of the cushion body 2.

It should also be noted that the overall shape of the head-rest 1, and that of the cushion body 2 in particular, is given purely by way of non-limitative example. It should further be noted that the support rods 3 could be designed so that their height, together with the inclination of the head-rest 1, is adjustable with respect to the back of the car seat onto which it is fitted by entirely conventional means.

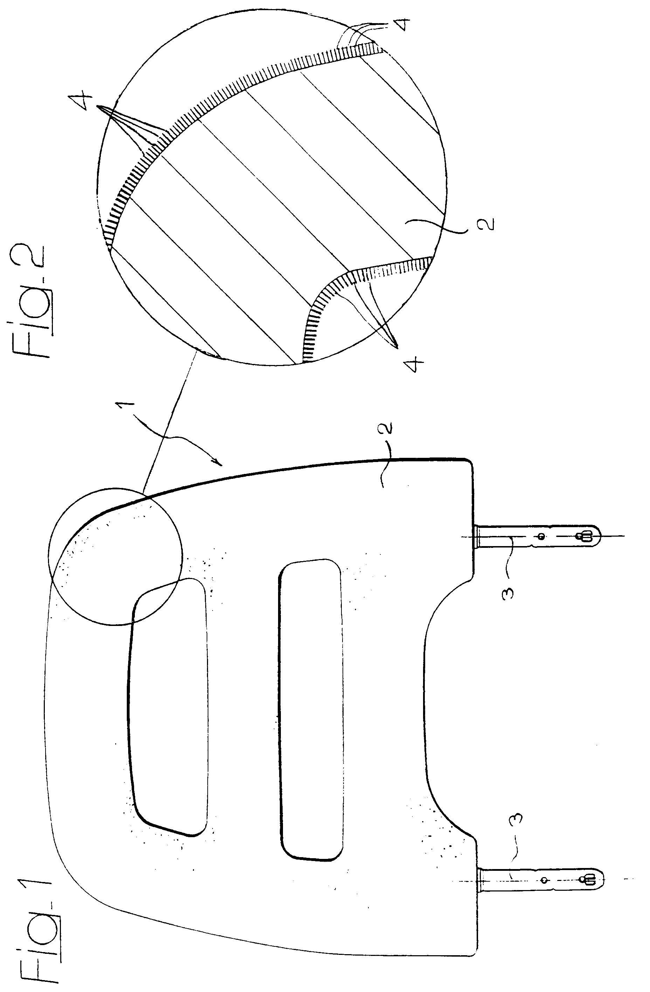

According to the invention, as shown in greater detail in Figure 2, the cushion body 2 has a velvety outer surface owing to the presence of short fibres 4 applied in a flocking process.

This process, also entirely conventional, consists in causing the fibres 4, which are all the same length, to adhere to the support defined by the cushion body 2. The fibres are electrostatically charged and precipitate onto the cushion body 2, arranging themselves normal to it and adhering securely thereto by means of an adhesive, generally a synthetic resin-based adhesive or similar type.

In Figure 2, the length of the fibres 4 has been deliberately exaggerated: in actual fact the fibres, also known as the "flock" are around two to three millimetres in length.

The scope of the invention naturally includes other embodiments serving a similar purpose and using the same innovative concept.

## Claims

1. A head-rest (1) for a car seat which comprises a cushion body (2) of expanded plastics material, characterised in that the cushion body (2) has a velvety outer surface formed by a flocking process.
